# EUROPÄISCHE PATENTSCHRIFT

(11) **EP 2 210 210 B1**
(45) Veröffentlichungstag und Bekanntmachung des Hinweises auf die Patenterteilung: **09.01.2013**
(21) Anmeldenummer: 08848600.6
(22) Anmeldetag: 11.11.2008
(51) Int. Cl.: G06K 7/00, G06K 19/07, G07F 7/10

(54) **VERFAHREN ZUM LADEN VON INITIALISIERUNGS- UND/ODER PERSONALISIERUNGSDATEN AUF EINEN TRAGBAREN DATENTRÄGER**
METHOD FOR LOADING INITIALIZATION AND/OR PERSONALIZATION DATA ONTO A PORTABLE DATA CARRIER
PROCÉDÉ DE CHARGEMENT DE DONNÉES D'INITIALISATION ET/OU DE PERSONNALISATION SUR UN SUPPORT DE DONNÉES PORTABLE

(30) Priorität: 12.11.2007 DE 102007053744
(43) Veröffentlichungstag der Anmeldung: 28.07.2010
(73) Patentinhaber: Giesecke & Devrient GmbH, 81677 München (DE)
(72) Erfinder: STOCKER, Thomas, 81739 München (DE); KRAMPOSTHUBER, Georg, 80639 München (DE)
(86) Internationale Anmeldenummer: PCT/EP2008/009508
(87) Internationale Veröffentlichungsnummer: WO 2009/062664

(56) Entgegenhaltungen:
- EP-A- 1 515 282
- WO-A-2006/100669
- DE-A1- 19 908 285

## Beschreibung

Die Erfindung betrifft ein Verfahren zum Laden von Initialisierungs- und/ oder Personalisierungsdaten auf einen tragbaren Datenträger, insbesondere auf eine Chipkarte. Ferner betrifft die Erfindung ein Verfahren zur Initialisierung eines tragbaren Datenträgers und einen tragbaren Datenträger.

Tragbare Datenträger werden heutzutage sehr vielfältig eingesetzt, beispielsweise zur Abwicklung von Transaktionen des Zahlungsverkehrs, als Ausweisdokumente bei Zugangskontrollen, als Berechtigungsnachweis zur Nutzung eines Mobilfunksystems und dergleichen. Um einen tragbaren Datenträger verwenden zu können, ist es in der Regel erforderlich, Daten im Rahmen einer Initialisierung in einem Speicher auf den Datenträger zu schreiben. Darüber hinaus sind tragbare Datenträger oftmals individualisiert, d.h. sie enthalten individuelle, nur für diesen Datenträger vorgesehene Daten, beispielsweise eine Mobilfunkidentifikationsnummer bei der Verwendung des Datenträgers in einem Mobiltelefon. Diese Personalisierungsdaten werden bei der Initialisierung des Datenträgers ebenfalls in einen Speicher des Datenträgers geschrieben.

Tragbare Datenträger umfassen üblicherweise einen Mikroprozessor mit einem internen Speicher, wobei bei der Initialisierung bzw. Personalisierung des Datenträgers die entsprechenden Initialisierungs- bzw. Personalisierungsdaten in dem internen Speicher hinterlegt werden. Das Übertragen von Daten in diesen internen Speicher erfolgt unter Zwischenschaltung des Mikroprozessors, wobei heutzutage in der Regel als Datenübertragungsprotokoll der Standard ISO 7816-3/4 eingesetzt wird. Das Laden von Initialisierungs- bzw. Personalisierungsdaten in den internen Speicher ist zeitaufwändig, da bei dieser Datenübertragung der Mikroprozessor zwischengeschaltet ist.

Um die Zeit zum Laden von Initialisierungs- bzw. Personalisierungsdaten bei der maschinellen Herstellung von Chipkarten zu verkürzen, ist es aus der Druckschrift WO 00/ 52635 A1 bekannt, auf der Chipkarte einen externen Speicher vorzusehen, auf den unter Umgehung des Mikroprozessors der Chipkarte zugegriffen werden kann. Durch Verwendung des externen Speichers zum Laden von Personalisierungsdaten können diese Daten sehr viel schneller auf die Karte übertragen werden.

Aus dem Dokument DE 196 34 064 A1 ist ebenfalls eine Chipkarte mit einem separaten Speicher für Personalisierungsdaten bekannt, wobei die Personalisierungsdaten unter Umgehung des Betriebssystems des Mikroprozessors auf den separaten Speicher geladen werden können.

In dem Dokument WO 2007/033792 A2 ist ein Verfahren zur Initialisierung und/ oder Personalisierung eines tragbaren Datenträgers beschrieben, bei dem eine Personalisierungsstation eingesetzt wird, welche eine Ladestation sowie eine separate Dekomprimierungsstation umfaßt. In der Ladestation werden die Personalisierungsdaten zunächst komprimiert auf den Datenträger geschrieben. Anschließend erfolgt die Dekomprimierung der Initialisierungs- bzw. Personalisierungsdaten in der Dekomprimierungsstation.

Aus der EP 1 515 282 A2 ist ein tragbarer Datenträger mit einem Mikroprozessor mit einem ersten Speicher sowie einem unabhängigen zweiten Speicher bekannt, wobei auf dem Datenträger verschlüsselte Daten geladen sind, die zumindest teilweise in dem zweiten Speicher gespeichert sind. Der zweite Speicher ist ein in einer unabhängigen Technik ausgeführtes Speicherme dium, das mit Hilfe eines Computers auslesbar ist; insbesondere ist der zweite Speicher ein optisch oder ein magnetisch auslesbarer Speicher.

DE 199 08 285 A1 offenbart eine Chipkarte mit einem Speicher zur Aufnahmen von Personalisierungsdaten, wobei die Personalisierungsdaten entweder über den Mikroprozessor der Chipkarte oder direkt über eine gesonderte Speicherschnittstelle in den Speicher geladen werden können. Die Einstellung der Ladeart erfolgt mittels eines hierzu vorgesehen Schalters.

WO 2006/100669 A2 offenbart ein Verfahren zum Laden von Anwendungsdaten in einen tragbaren Datenträger, der über einen Mikroprozessor mit einem Ausführungsspeicher sowie über einen Flash-Speicher verfügt, auf den über eine separate schnelle Schnittstelle zugegriffen werden kann. Das Laden von Anwendungsdaten erfolgt, indem die Anwendungsdaten in dem Flash-Speicher bereitgestellt werden und auf Anforderung durch den Mikroprozessor in dessen Ausführungsspeicher kopiert werden.

Bei der Initialisierung bzw. Personalisierung von tragbaren Datenträgern erweist es sich oftmals als nachteilhaft, daß die Initialisierung bzw. Personalisierung durch speziell ausgebildete Personalisierungsstationen bei der Herstellung der Karte vorgenommen wird. Es besteht somit nicht die Möglichkeit, einen Datenträger erst später nach seiner Auslieferung auf einfache Weise ohne spezielle Personalisierungsstationen zu initialisieren bzw. zu personalisieren.

Aufgabe der Erfindung ist es deshalb, ein Verfahren zum Laden von Initialisierungs- und/ oder Personalisierungsdaten auf einen tragbaren Datenträger zu schaffen, mit dem eine einfache Initialisierung bzw. Personalisierung des Datenträgers ermöglicht wird.

Diese Aufgabe wird durch ein Verfahren gemäß den Patentansprüchen 1 und 7 gelöst.

In dem erfindungsgemäßen Verfahren werden die Initialisierungs- bzw. Personalisierungsdaten in einen Datenträger geladen, der einen Mikroprozessor mit einem ersten Speicher sowie einen zusätzlichen zweiten Speicher umfaßt. Der zweite Speicher ist dabei über eine Speicherschnittstelle mit dem Mikroprozessor verbunden, so daß hierüber auch ein Datenaustausch zwischen dem ersten Speicher und zweiten Speicher erfolgen kann. Über eine erste Schnittstelle können Daten unter Zwischenschaltung des Mikroprozessors in den ersten Speicher geladen werden, über eine zweite Schnittstelle in den zweiten Speicher. Vorteilhaft ist die zweite Schnittstelle direkt mit dem zweiten Speicher verbunden, ohne Zwischenschaltung des Mikroprozessors. Die erste Schnittstelle verwendet zur Datenübertragung insbesondere das für Chipkarten hinlänglich bekannten Protokoll der Norm ISO 7816, insbesondere ISO 7816-3/4. Demgegenüber wird als zweite Schnittstelle eine Hochgeschwindigkeitsschnittstelle, etwa eine USB-Schnittstelle verwendet, welche eine Datenübertragung mit hoher Geschwindigkeit gewährleistet.

Das erfindungsgemäße Verfahren zeichnet sich dadurch aus, daß die Initialisierungs- und/ oder Personalisierungsdaten verschlüsselt und die verschlüsselten Initialisierungs- und/oder Personalisierungsdaten auf den Datenträger geladen werden, wobei die verschlüsselten Initialisierungs- und/ oder Personalisierungsdaten zumindest teilweise über die zweite Schnittstelle in den zweiten Speicher übertragen werden.

Das erfindungsgemäße Verfahren hat den Vorteil, daß durch die Verwendung der zweiten Schnittstelle, welche mit einem "High Speed"-Protokoll arbeitet, die Initialisierungs- bzw. Personalisierungsdaten wesentlich schneller auf den Datenträger übertragen werden können. Darüberhinaus wird durch die Verschlüsselung erreicht, daß keine sofortige Initialisierung bzw. Personalisierung des Datenträgers stattfindet, sondern erst zu einem späteren Zeitpunkt auf einfache Weise durch Entschlüsseln der Initialisierungs- bzw. Personalisierungsdaten vorgenommen werden kann.

Eine besonders schnelle Übertragung der verschlüsselten Initialisierungs- und/ oder Personalisierungsdaten auf den Datenträger wird in einer bevorzugten Ausführungsform dadurch gewährleistet, daß diese Daten vollständig über die zweite Schnittstelle in den zweiten Speicher geladen werden.

In einer weiteren, besonders bevorzugten Ausführungsform der Erfindung werden ferner die Schlüssel, mit denen die verschlüsselten Initialisierungs- bzw. Personalisierungsdaten entschlüsselt werden können, über die erste Schnittstelle in den ersten Speicher geladen. Da die Schlüssel im Regelfall wenig Speicherplatz benötigen, wird die Datenübertragung trotz der Verwendung der langsameren ersten Schnittstelle nicht zeitlich verzögert.

Die Initialisierungs- bzw. Personalisierungsdaten, welche verschlüsselt auf den Datenträger geladen werden, umfassen insbesondere die Firmware des Mikroprozessors und/ oder Personalisierungsdaten, welche für den ersten Speicher vorgesehen sind, und/oder Personalisierungsdaten, welche für den zweiten Speicher vorgesehen sind. Die Personalisierungsdaten für den zweiten Speicher umfassen beispielsweise Multimediadateien.

Die eigentliche Initialisierung des Datenträgers mit den darauf gespeicherten Initialisierungs- bzw. Personalisierungsdaten erfolgt erfindungsgemäß dadurch, daß die verschlüsselten Initialisierungs- und/oder Personalisierungsdaten entschlüsselt werden und anschließend zumindest teilweise über die Speicherschnittstelle in den ersten Speicher kopiert werden. In einer bevorzugten Variante sind auf dem Datenträger die Schlüssel zum Entschlüsseln der Initialisierungs- bzw. Personalisierungsdaten im ersten Speicher hinterlegt und werden bei der Initialisierung des Datenträgers zum Entschlüsseln verwendet. Es ist somit nicht notwendig, daß die Schlüssel separat über andere Kommunikationswege zur Initialisierung bereitgestellt werden.

In einer weiteren Ausgestaltung erfolgt die Initialisierung erst im Feld bei der Inbetriebnahme des tragbaren Datenträgers, insbesondere bei der Aktivierung (d.h. beim ersten Hochfahren des Datenträgers) in einem Endgerät, wie z.B. einem Mobilfunkgerät.

In einer weiteren Ausführung der erfindungsgemäßen Initialisierung werden die verschlüsselten Initialisierungs- und/oder Personalisierungsdaten nach der Initialisierung von dem Datenträger gelöscht, wodurch ein Neustart bzw. eine Umkonfiguration des Datenträgers zu einem späteren Zeitpunkt nicht mehr möglich ist. Alternativ können die verschlüsselten Initialisierungs- und/oder Personalisierungsdaten nach der Initialisierung auch auf dem Datenträger verbleiben, um den Datenträger gegebenenfalls zu einem späteren Zeitpunkt im Feld nochmals neu zu initialisieren bzw. umzukonfigurieren.

Ausführungsbeispiele der Erfindung werden nachfolgend anhand der beigefügten Figuren detailliert beschrieben.

Es zeigen:
Fig.1 eine schematische Darstellung einer Chipkarte, welche mit Initialisierungs- und Personalisierungsdaten gemäß einer Ausführungsform des erfindungsgemäßen Verfahrens geladen werden kann; und
Fig. 2 eine schematische Darstellung, welche beispielhaft Inhalte des externen und internen Speichers der Chipkarte gemäß Fig. 1 wiedergibt.

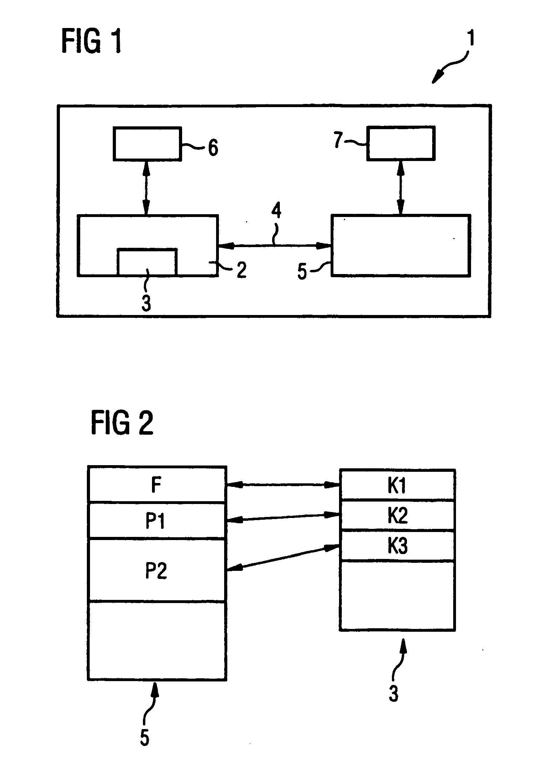

Die nachfolgend beschriebene Ausführungsform des erfindungsgemäßen Verfahrens wird am Beispiel des Ladens von Initialisierungs- und Personalisierungsdaten auf die in Fig.1 dargestellte Chipkarte 1 beschrieben Diese Karte stellt eine sog. Smartcard dar, auf der ein Mikroprozessor 2 in der Form eines Mikrocontrollers vorgesehen ist, der über einen internen Speicher 3 verfügt. Der Speicher 3 ist hierbei ein nichtflüchtiger Speicher, z.B. ein NOR-Flash. Der Mikroprozessor 2 ist über eine interne Speicherschnittstelle 4 mit einem externen Speicher 5 verbunden, der ebenfalls ein nichtflüchtiger Speicher ist, der aber insbesondere für das "Streamen" großer Datenmengen ausgelegt ist; beispielsweise ist der Speicher 5 ein NAND-Flash. Der Mikrocontroller 2 dient zur Durchführung von Steuerungsvorgängen auf der Chipkarte, insbesondere von Schreib- und Lesevorgängen im internen Speicher 3 sowie über die Speicherschnittstelle 4 im externen Speicher 5. Der Mikrocontroller 2 ist ferner mit einer Schnittstelle 6 verbunden, über welche unter Zwischenschaltung des Mikrocontrollers Daten auf den Speicher 3 der Chipkarte geschrieben werden können. Die Schnittstelle 6 ist typischerweise eine ISO₋Standardschnittstelle mit ISO-Standardkontakten, über welche mit dem bekannten Protokoll ISO 7816-3/4 Daten auf die Chipkarte übertragen werden können bzw. von der Chipkarte ausgelesen werden können. Das Protokoll ISO 7816-3/4 ist vergleichsweise langsam, so daß in über die Schnittstelle 6 nur entsprechend kleine Datenübertragungsraten erzielt werden können.

Um Daten mit höherer Geschwindigkeit übertragen zu können, weist die Chipkarte 1 ferner eine weitere Schnittstelle 7 auf, die entweder, wie in Fig. 1 angedeutet, oder aber über den Mikroprozessor 2 mit dem externen Speicher 5 verbunden ist. Bei der Schnittstelle 7 handelt es sich um eine USB-Schnittstelle, über die mit sehr hoher Geschwindigkeit Daten auf die Chipkarte übertragen werden können. Die Schnittstelle 7 kann hierzu mit einem speziellen Schnittstellencontroller ausgestattet sein. Ist die Schnittstelle 7 direkt mit dem externen Speicher 5 verbunden, ohne daß der Mikroprozessor 2 zwischengeschaltet ist, ist der Speicher 5 vorzugsweise mit Mass-Storage-Kommandos über die USB-Schnittstelle ansprechbar. Ist die Schnittstelle 7 mit dem Mikroprozessor 7 verbunden, ist die interne Speicherschnittstelle 4 vorzugsweise vom "High Speed"-Typ, beispielsweise gemäß dem USB-Standard.

Ziel des nachfolgend beschriebenen Verfahrens ist zum einen, möglichst schnell Initialisierungs- bzw. Personalisierungsdaten auf der Chipkarte abzuspeichern Zum anderen soll die Möglichkeit geschaffen werden, daß die Karte mit geringem Aufwand mit Hilfe der Initialisierungs- bzw. Personalisierungsdaten im Feld initialisiert werden kann, ohne daß hierzu eine spezielle Personalisierungsstation vorgesehen sein muß. Zum Laden der Initialisierungs- und Personalisierungsdaten auf die Chipkarte werden diese zunächst verschlüsselt und über die schnelle USB-Schnittstelle 7 entweder direkt oder über den Mikrocontroller 2 und die Speicherschnittstelle 4 in den externen Speicher 5 übertragen. Die Daten werden hierbei linear in den externen Speicher 5 gestreamt. Hierdurch kann die Schreibzeit auf ein Minimum reduziert werden, da komplette Sektoren gelöscht und der Speicher ohne Lücken beschrieben werden kann. Darüber hinaus können die verschlüsselten Daten durch die Verwendung der gängigen USB-Schnittstelle mit einfachen Standardkomponenten, wie z.B. einem handelsüblichen PC, auf die Karte geschrieben werden, und es sind keine speziellen Maschinen mehr erforderlich.

Im Unterschied zu den verschlüsselten Daten werden die Schlüssel, mit denen die Daten in dem Speicher 5 entschlüsselt werden können, über die ISO-Schnittstelle 6 unter Zwischenschaltung des Mikrocontrollers 2 in den internen Speicher 3 geschrieben. Da die Datenmenge für diese Schlüssel geringer als die eigentlichen verschlüsselten Daten ist, wird hierzu nur eine kurze Übertragungszeit benötigt, auch wenn die ISO-Schnittstelle langsamer arbeitet als die USB-Schnittstelle.

Fig. 2 zeigt eine schematische Darstellung, welche beispielhaft verschlüsselte Initialisierungs- und Personalisierungsdaten sowie entsprechende Schlüssel zum Entschlüsseln der Daten nach der Speicherung auf die Chipkarte 1 wiedergibt. Wie oben dargelegt, enthält der interne Speicher 3 die Schlüssel zum Entschlüsseln der verschlüsselten Daten in dem Speicher 3, wobei in Fig. 2 beispielhaft drei Schlüssel K1, K2 und K3 gezeigt sind. In dem Beispiel der Fig. 2 enthält der externe Speicher 5 als verschlüsselte Daten die verschlüsselte Firmware F des Mikrocontrollers, welche nach Initialisierung der Karte in den internen Speicher 3 geschrieben wird. Darüberhinaus sind verschlüsselte Personalisierungsdaten P1 und P2 im externen Speicher 5 enthalten, wobei die Personalisierungsdaten P1 nach Initialisierung der Karte in den internen Speicher 3 geschrieben werden. Als weitere Personalisierungsdaten P2 sind Multimediadaten vorgesehen, die nach der Initialisierung im externen Speicher 5 verbleiben. Die Entschlüsselung der Daten F, P1 und P2 erfolgt mit den Schlüsseln K1, K2 und K3, wie durch die Doppelpfeile in Fig. 2 angedeutet ist. Hierbei sind die unterschiedlichen Schlüssel vorzugsweise verschiedenen Speicheradressen im Speicher 5 zugeordnet.

Die Chipkarte 1, welche mit dem oben beschriebenen Verfahren mit der Initialisierungs- und Personalisierungsdaten geladen ist, kann besonders einfach initialisiert werden. Insbesondere kann die Initialisierung beim Aktivieren bzw. ersten Hochfahren der Karte in dem Gerät erfolgen, in dem die Chipkarte eingesetzt werden soll. Ein solches Gerät kann beispielsweise ein Mobiltelefon sein, wobei die Chipkarte in diesem Fall die SIM-Karte darstellt.

Die Initialisierung der Karte kann beim Mobilfunkanbieter in der Verkaufsstelle der Karte vorgenommen werden, sie kann jedoch auch vom Endkunden selbst durchgeführt werden. Bei der Initialisierung werden die verschlüsselten Daten F, P1 und P2 mit den Schlüsseln K1 bis K3 entschlüsselt, wobei anschließend ein Teil der Daten in den internen Speicher 3 geschrieben wird. In der hier beschriebenen Ausführungsform werden die Firmware F des Mikrocontrollers sowie die Personalisierungsdaten P1 über die Speicherschnittstelle 4 in den internen Speicher 3 entsprechend ihrer Zieladresse geschrieben, wohingegen die entschlüsselten Multimediadaten in dem externen Speicher 5 verbleiben

Um eine nochmalige Initialisierung der Chipkarte zu verhindern, werden die Firmware F und die Personalisierungsdaten P1 nach der Initialisierung der Karte zweckmäßig aus dem Speicher 5 gelöscht. Gegebenenfalls kann es jedoch erwünscht sein, daß die Karte auch später noch umkonfiguriert werden kann. In diesem Fall verbleiben die Firmware F und die Personalisierungsdaten P1 im externen Speicher 5, um gegebenenfalls die Karte zu einem späteren Zeitpunkt nochmals neu zu initialisieren.

## Patentansprüche

1. Verfahren zum Laden von Initialisierungs- und/ oder Personalisierungsdaten (F, P1, P2) auf einen tragbaren Datenträger (1), insbesondere auf eine Chipkarte, wobei der Datenträger (1) einen Mikroprozessor (2) mit einem ersten Speicher (3) sowie einen zweiten Speicher (5) umfaßt, der über eine Speicherschnittstelle (4) mit dem Mikroprozessor (2) verbunden ist, wobei Daten unter Zwischenschaltung des Mikroprozessors (2) über eine erste Schnittstelle (6) auf den ersten Speicher (3) ladbar sind und Daten unabhängig vom Mikroprozessor (2) über eine zweite Schnittstelle (7) auf den zweiten Speicher (5) ladbar sind und wobei die Initialisierungs- und/oder Personalisierungsdaten (F, P1, P2) zumindest teilweise zum Eingeschriebenwerden in den ersten Speicher (3) des Datenträgers (1) bestimmt sind, **dadurch gekennzeichnet, daß**
die Initialisierungs- und/ oder Personalisierungsdaten (F, P1, P2) verschlüsselt werden und die verschlüsselten Initialisierungs- und/oder Personalisierungsdaten (F, P1, P2) auf den Datenträger (1) geladen werden, wobei die verschlüsselten Initialisierungs- und/oder Personalisierungsdaten (F, P1, P2) zumindest teilweise über die zweite Schnittstelle (7) in den zweiten Speicher (5) des Datenträgers (1) übertragen werden.

2. Verfahren nach Anspruch 1, **dadurch gekennzeichnet, daß** das Laden von Daten über die erste Schnittstelle (6) basierend auf dem Protokoll gemäß der Norm ISO 7816, insbesondere ISO 7816-3/4, erfolgt.

3. Verfahren nach Anspruch 1, **dadurch gekennzeichnet, daß** das Laden von Daten über die zweite Schnittstelle (7) basierend auf dem USB-Protokoll erfolgt.

4. Verfahren nach Anspruch 1, **dadurch gekennzeichnet, daß** die verschlüsselten Initialisierungs- und/oder Personalisierungsdaten (F, P1, P2) vollständig über die zweite Schnittstelle (7) in den zweiten Speicher (5) übertragen werden.

5. Verfahren nach Anspruch 1, **dadurch gekennzeichnet, daß** ein oder mehrere Schlüssel (K1, K2, K3) zum Entschlüsseln der verschlüsselten Initialisierungs- und/ oder Personalisierungsdaten (F, P1, P2) über die erste Schnittstelle (6) in den ersten Speicher (3) übertragen werden.

6. Verfahren nach Anspruch 1, **dadurch gekennzeichnet, daß** die Initialisierungs- und/ oder Personalisierungsdaten (F, P1, P2) die Firmware (F) des Mikroprozessors (2) und/oder Personalisierungsdaten (P1) für den ersten Speicher (3) und/ oder Personalisierungsdaten (P2) für den zweiten Speicher (5), insbesondere Multimediadateien, umfassen.

7. Verfahren zur Initialisierung eines tragbaren Datenträgers (1), in dem Initialisierungs- und/ oder Personalisierungsdaten (F, P1, P2) mit einem Verfahren nach Anspruch 1geladen sind, **dadurch gekennzeichnet, daß** die im zweiten Speicher (5) abgelegten, verschlüsselten Initialisierungs- und/ oder Personalisierungsdaten (F, P1, P2) entschlüsselt und anschließend zumindest teilweise über die Speicherschnittstelle (4) in den ersten Speicher (3) des Datenträgers (1) übertragen werden.

8. Verfahren nach Anspruch 7 in Kombination mit einem tragbaren Datenträger (1), in dem Initialisierungs- und/ oder Personalisierungsdaten mit einem Verfahren nach Anspruch 5 geladen sind, **dadurch gekennzeichnet, daß** die Entschlüsselung der verschlüsselten Initialisierungs- und/ oder Personalisierungsdaten (F, P1, P2) mit dem oder den in den ersten Speicher (3) übertragenen Schlüsseln (K1, K2, K3) erfolgt.

9. Verfahren nach Anspruch 7, **dadurch gekennzeichnet, daß** die Initialisierung bei der Inbetriebnahme des Datenträgers (1) erfolgt, insbesondere bei Aktivierung des Datenträgers (1) in einem Endgerät, vorzugsweise in einem Mobilfunkgerät.

10. Verfahren nach Anspruch 7, **dadurch gekennzeichnet, daß** die verschlüsselten Initialisierungs- und/oder Personalisierungsdaten (F, P1, P2) nach der Initialisierung von dem Datenträger (1) gelöscht werden.

11. Verfahren nach Anspruch 7, **dadurch gekennzeichnet, daß** die verschlüsselten Initialisierungs- und/oder Personalisierungsdaten (F, P1, P2) nach der Initialisierung auf dem Datenträger (1) verbleiben.

## Claims

1. A method for loading initialization data and/ or personalization data (F, P1, P2) on a portable data carrier (1), in particular on a chip card, wherein the data carrier (1) comprises a microprocessor (2) with a first memory (3) as well as a second memory (5) which is connected to the microprocessor (2) via a memory interface (4), wherein data can be loaded through the intermediary of the microprocessor (2) via a first interface (6) on the first memory (3), and data can be loaded independently of the microprocessor (2) via a second interface (7) on the second memory (5), and wherein the initialization data and/ or personalization data (F, P1, P2) are intended at least partly to be written to the first memory (3) of the data carrier (1), **characterized in that**
the initialization data and/ or personalization data (F, P1, P2) are encrypted and the encrypted initialization data and/ or personalization data (F, P1, P2) are loaded on the data carrier (1), wherein the encrypted initialization data and/ or personalization data (F, P1, P2) are transferred at least partly via the second interface (7) to the second memory (5) of the data carrier (1).

2. The method according to claim 1, **characterized in that** the loading of data via the first interface (6) takes place on the basis of the protocol according to the ISO 7816 standard, in particular ISO 7816-3/4.

3. The method according to claim 1, **characterized in that** the loading of data via the second interface (7) takes place on the basis of the USB protocol.

4. The method according to claim 1, **characterized in that** the encrypted initialization data and/ or personalization data (F, P1, P2) are transferred entirely via the second interface (7) to the second memory (5).

5. The method according to claim 1, **characterized in that** one or several keys (K1, K2, K3) for decrypting the encrypted initialization data and/ or personalization data (F, P1, P2) are transferred via the first interface (6) to the first memory (3).

6. The method according to claim 1, **characterized in that** the initialization data and/ or personalization data (F, P1, P2) comprise the firmware (F) of the microprocessor (2) and/or personalization data (P1) for the first memory (3) and/ or personalization data (P2) for the second memory (5), in particular multimedia files.

7. A method for initializing a portable data carrier (1), in which initialization data and/or personalization data (F, P1, P2) are loaded using a method according to claim 1, **characterized in that** the encrypted initialization data and/ or personalization data (F, P1, P2) stored in the second memory (5) are decrypted and subsequently transferred at least partly via the memory interface (4) to the first memory (3) of the data carrier (1).

8. The method according to claim 7 in combination with a portable data carrier (1), in which initialization data and/ or personalization data are loaded using a method according to claim 5, **characterized in that** the decryption of the encrypted initialization data and/ or personalization data (F, P1, P2) takes place using the key or keys (K1, K2, K3) transferred to the first memory (3).

9. The method according to claim 7, **characterized in that** the initialization takes place upon the initial operation of the data carrier (1), in particular upon activating the data carrier (1) in a terminal, preferably in a mobile communications device.

10. The method according to claim 7, **characterized in that** the encrypted initialization and/ or personalization data (F, P1, P2) are deleted from the data carrier (1) after the initialization.

11. The method according to claim 7, **characterized in that** the encrypted initialization data and/ or personalization data (F, P1, P2) remain on the data carrier (1) after the initialization.

## Revendications

1. Procédé de chargement de données d'initialisation et/ou de personnalisation (F, P1, P2) sur un support de données portable (1), notamment sur une carte à puce, le support de données (1) comprenant un microprocesseur (2) pourvu d'une première mémoire (3) ainsi qu'une seconde mémoire (5) qui est reliée via une interface de mémoire (4) au microprocesseur (2), des données étant chargeables sur la première mémoire (3) via une première interface (6) avec connexion intermédiaire du microprocesseur (2) et des données étant chargeables sur la seconde mémoire (5) via une seconde interface (7) indépendamment du microprocesseur (2) et les données d'initialisation et/ou de personnalisation (F, P1, P2) étant destinées au moins partiellement à être écrites dans la première mémoire (3) du support de données (1), **caractérisé en ce que**
les données d'initialisation et/ou de personnalisation (F, P1, P2) sont chiffrées et **en ce que** les données d'initialisation et/ou de personnalisation (F, P1, P2) chiffrées sont chargées sur le support de données (1), les données d'initialisation et/ou de personnalisation (F, P1, P2) chiffrées étant au moins partiellement transmises via la seconde interface (7) dans la seconde mémoire (5) du support de données (1).

2. Procédé selon la revendication 1, **caractérisé en ce que** le chargement de données via la première interface (6) a lieu sur la base du protocole conforme à la norme ISO 7816, notamment ISO 7816-3 / 4.

3. Procédé selon la revendication 1, **caractérisé en ce que** le chargement de données via la seconde interface (7) a lieu sur la base du protocole USB.

4. Procédé selon la revendication 1, **caractérisé en ce que** les données d'initialisation et/ou de personnalisation (F, P1, P2) chiffrées sont entièrement transmises via la seconde interface (7) dans la seconde mémoire (5).

5. Procédé selon la revendication 1, **caractérisé en ce qu'**une ou plusieurs clés (K1, K2, K3) sont transmises dans la première mémoire (3) via la première interface (6) pour le déchiffrement des données d'initialisation et/ou de personnalisation (F, P1, P2) chiffrées.

6. Procédé selon la revendication 1, **caractérisé en ce que** les données d'initialisation et/ou de personnalisation (F, P1, P2) comprennent le micrologiciel (F) du microprocesseur (2) et/ou des données de personnalisation (P1) pour la première mémoire (3) et/ou des données de personnalisation (P2) pour la seconde mémoire (5), notamment des fichiers multimédias.

7. Procédé d'initialisation d'un support de données portable (1), dans lequel des données d'initialisation et/ou de personnalisation (F, P1, P2) sont chargées avec un procédé selon la revendication 1, **caractérisé en ce que** les données d'initialisation et/ou de personnalisation (F, P1, P2) chiffrées stockées dans la seconde mémoire (5) sont déchiffrées puis au moins partiellement transmises via l'interface de mémoire (4) dans la première mémoire (3) du support de données (1).

8. Procédé selon la revendication 7 en combinaison avec un support de données portable (1), dans lequel des données d'initialisation et/ou de personnalisation sont chargées avec un procédé selon la revendication 5, **caractérisé en ce que** le déchiffrement des données d'initialisation et/ou de personnalisation (F, P1, P2) chiffrées a lieu avec la ou les clés (K1, K2, K3) transmises dans la première mémoire (3).

9. Procédé selon la revendication 7, **caractérisé en ce que** l'initialisation a lieu lors de la mise en marche du support de données (1), notamment lors de l'activation du support de données (1) dans un terminal, de préférence dans un appareil de radiocommunication mobile.

10. Procédé selon la revendication 7, **caractérisé en ce que** les données d'initialisation et/ou de personnalisation (F, P1, P2) chiffrées sont effacées du support de données (1) après l'initialisation.

11. Procédé selon la revendication 7, **caractérisé en ce que** les données d'initialisation et/ou de personnalisation (F, P1, P2) chiffrées demeurent sur le support de données (1) après l'initialisation.
